# EUROPEAN PATENT APPLICATION

(11) **EP 4 435 377 A1**
(43) Date of publication of application: **25.09.2024**
(21) Application number: 22891621.9
(22) Date of filing: 09.09.2022
(51) Int. Cl.: G01B 11/25

(54) **STRUCTURED LIGHT CODING METHOD AND SYSTEM FOR THREE-DIMENSIONAL INFORMATION RECONSTRUCTION**

(30) Priority: 15.11.2021 CN 202111350080
(71) Applicant: Alliedstar Medical Equipment Co., Ltd, Ziyang, Sichuan 641300 (CN)
(72) Inventor: WU, Houhang, Ziyang, Sichuan 641300 (CN)
(74) Representative: Winter, Brandl - Partnerschaft mbB
(86) International application number: PCT/CN2022/118053
(87) International publication number: WO 2023/082816

(57) **Abstract**

A structured light coding method and system for three-dimensional information reconstruction. The method comprises: forming at least three projection images, wherein a coding pattern, which is formed by all the projection images after being aligned, comprises a first-type sub-patterns and second-type sub-patterns; the first-type sub-patterns and the second-type sub-patterns alternately appear, the first-type sub-patterns show stripes in only one projection image, and the second-type sub-patterns show stripes in at least two projection images; and any two adjacent first-type sub-patterns show stripes in different projection images (S100). By means of the method, the correspondence between an imaging position and a projection position can be determined, at a high resolution, with fewer projection images, thereby improving the measurement efficiency of a system; and an imaging position and a projection position are correctly matched for a three-dimensional point with a greater depth of field, and the matching robustness is relatively good.

## Description

### Technical Field

The present disclosure relates to the field of three-dimensional information reconstruction, and in particular to a structured light coding method and system for three-dimensional information reconstruction.

### Background Art

In fields such as industrial control and medical care, many technologies have been used for three-dimensional information reconstruction of object surfaces. Among them, grating fringe projection methods based on structured light have been widely studied and applied due to their advantages of high precision, high efficiency and high robustness.

In such methods, it mainly projects specific coded grating fringes onto the surface of an object to be measured as a projection image of structured light through a projection apparatus, and then uses an image sensor, such as a camera, to capture the structured light modulated and reflected by the surface of the object, so as to obtain an imaging image. The imaging image is decoded to find out the corresponding relationship between each imaging position and projection position in the decoded pattern. Since the position of the coding pattern projected onto the object is known, based on the aforementioned corresponding relationship, the three-dimensional information of the surface of the object can be obtained using trigonometric methods.

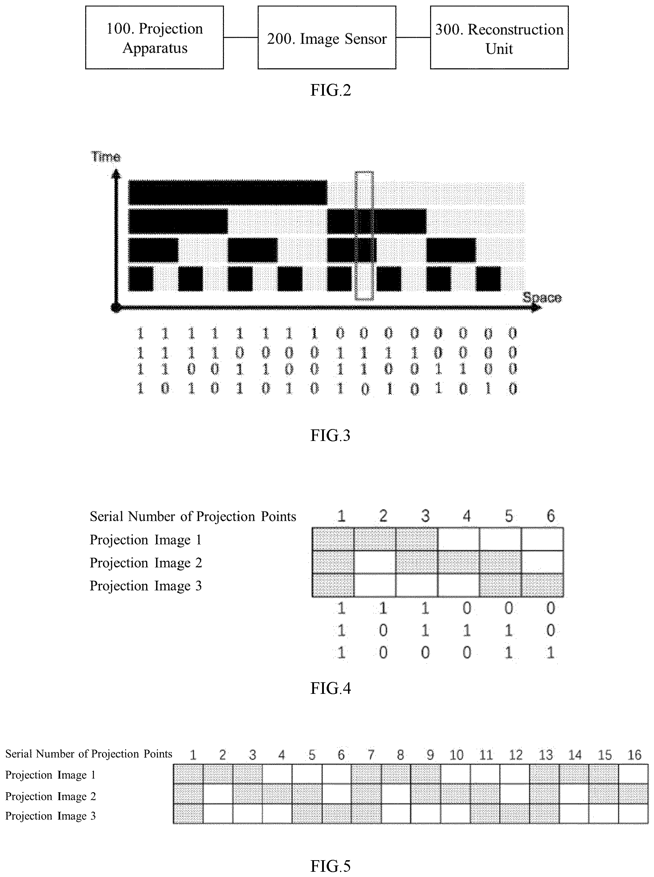

A commonly used structured light coding method is temporal coding. The temporal coding method projects multiple patterns into the space to be measured in turn in time sequence, and each projection is imaged by the camera. As shown in FIG.3, assume that there are four images, and set the code value of the shaded part to be 1, and the code value of the uncovered part to be 0. Each projection generates a code value for each imaging point. After four projections, it generates a code-word (the binary code-word with a length of 4 in FIG.3) corresponding to each imaging point one-to-one. According to the binary code-word of the imaging point, the corresponding relationship between the imaging point and the projection point can be determined.

Gray code is an improvement of binary code, which has better robustness than binary code. In order to improve the resolution, the number of projection positions will be larger. Whether it is Gray code or binary code, if the number of projection positions is 2^{N}, then at least N projection images are needed to ensure the decoding of the imaging image.

A large number of projection images may help improve the measurement accuracy of the system. However the large number of projection images will affect the measurement efficiency of the system, resulting in a complicated three-dimensional reconstruction process. Therefore, it is necessary to reduce the number of images to be obtained while ensuring the measurement accuracy.

### Summary of the Invention

One of the purposes of the present disclosure is to provide a structured light coding method and system for three-dimensional information reconstruction, which is used to solve the problem that currently used coding methods require a large number of projection images.

The technical solutions provided by the present disclosure are as follows.

A structured light coding method for three-dimensional information reconstruction comprises: generating at least three projection images, wherein a coding pattern composed by aligning all the projection images comprises sub-patterns of a first type and sub-patterns of a second type, and the sub-pattern are patterns formed by all the projection images at a same projection position.

The sub-patterns of the first type and the sub-patterns of the second type appear alternately, where the sub-patterns of the first type have a stripe only in one projection image, and the sub-patterns of the second type have stripes in at least two projection images. Any two adjacent sub-patterns of the first type have stripes in different projection images.

In some embodiments, any two adjacent sub-patterns of the first type have stripes in different projection images comprises that, in the coding pattern, the sub-patterns of the first type sequentially have stripes in all the projection images in turn.

In some embodiments, any two adjacent sub-patterns of the second type have different patterns.

In some embodiments, any two adjacent sub-patterns of the second type have different patterns comprises that, in patterns of adjacent sub-patterns of the second type, positions where stripes appear in the projection image are different, or number of stripes appearing in the projection image is different.

In some embodiments, set a sub-pattern of a third type in the sub-patterns of the second type, and the sub-pattern of the third type has stripes in all the projection images.

In some embodiments, set a first sub-pattern as the sub-pattern of the third type.

In some embodiments, determine a basic pattern, where a pattern of each sub-pattern in the basic pattern is different; and repeat each sub-pattern of the basic pattern according to a same predetermined period.

In some embodiments, the coding pattern further comprises sub-patterns of a fourth type. A sub-pattern of the fourth type is interposed between the sub-pattern of the first type and the sub-pattern of the second type adjacent to each other.

The present invention further provides a system for three-dimensional information reconstruction comprising: a projection apparatus, an image sensor, and a reconstruction unit. The projection apparatus is configured to form a plurality of projection images according to the aforementioned structured light coding method for three-dimensional information reconstruction, and project the projection images to a surface of an object to be measured in time sequence. The image sensor is configured to image the projection images projected on the surface of the object to be measured, so as to obtain an imaging image. The reconstruction unit is configured to decode the imaging image, determine a corresponding relationship between each imaging position and projection position, and reconstruct three-dimensional information of the surface of the object to be measured according to the corresponding relationship.

The structured light coding method and system for three-dimensional information reconstruction provided by the present invention may at least bring the following beneficial effects.
1. By arranging sub-patterns of the first type and sub-patterns of the second type in the coding pattern, in which the two types of sub-patterns appear alternately, the present invention, compared with the existing binary coding/Gray code coding scheme, may determine the corresponding relationship between the imaging position and the projection position with fewer projection images at high resolution, thereby improving the measurement efficiency of the system.
2. By causing sub-patterns of the first type appear stripes sequentially in all the projection images, and/or introducing sub-patterns of the fourth type, and/or appropriately increasing the number of projection images, the present invention may achieve larger depth of field, which enables the imaging position and projection position for three-dimensional points with larger depth of field to be correctly matched, and has better matching robustness.

### Brief Description of the Drawings

With reference to the preferred implementations illustrated in the drawings, the above characteristics, technical features, advantages and implementations of a structured light coding method and system for three-dimensional information reconstruction will be further explained in a clear and easy-to-understand way.
FIG. 1 illustrates a flowchart of an embodiment of a structured light coding method for three-dimensional information reconstruction of the present invention.
FIG.2 illustrates a structural diagram of a system for three-dimensional information reconstruction of the present invention.
FIG.3 illustrates a logic diagram of an existing binary coding pattern.
FIG.4 illustrates a logic diagram of a structured light coding pattern of the present invention.
FIG.5 illustrates another logic diagram of a structured light coding pattern of the present invention.
FIG.6 illustrates another logic diagram of a structured light coding pattern of the present invention.
FIG.7 illustrates another logic diagram of a structured light coding pattern of the present invention.
FIG.8 illustrates a diagram of a structured light coding pattern of the present invention.

### Detailed Description of Embodiments

In order to clearly illustrate the embodiment of the present invention or the technical scheme in prior arts, the embodiments of the present invention will be described below with reference to the drawings. Obviously, the drawings in the following description are only some of the embodiments of the present invention. For those skilled in the art, other drawings and other embodiments may be obtained according to these drawings without creative efforts.

In order to simplify the drawings, only the parts related to the present invention are schematically shown in each drawing, and they do not represent the actual structure of the product. In addition, in order to make the drawing concise and easy to understand, in some drawings, only one of the components with the same structure or function is schematically drawn or only one of them is marked. Herein, "one" not only means "only one", but also means "more than one".

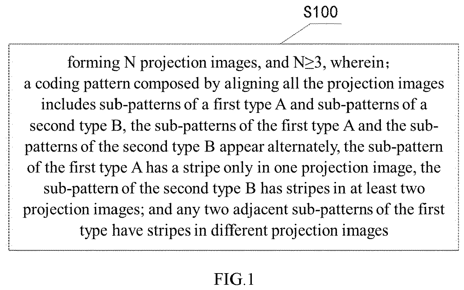

According to one embodiment of the present invention, as shown in FIG. 1, a structured light coding method for three-dimensional information reconstruction includes:
Step S100: forming N projection images, and N≥3, wherein:

A coding pattern composed by aligning all the projection images includes sub-patterns of a first type A and sub-patterns of a second type B, where the sub-pattern is a pattern formed by all the projection images at a same projection position.

The sub-patterns of the first type A and the sub-patterns of the second type B appear alternately. The sub-pattern of the first type A has a stripe only in one projection image. The sub-pattern of the second type B has stripes in at least two projection images. And any two adjacent sub-patterns of the first type have stripes in different projection images.

In particular, the present embodiment is a temporal coding method of structured light. The temporal coding method is to project a plurality of patterns to a surface of an obj ect to be measured in turn in time sequence. Each pattern, also known as a projection image, is composed of a row of structured lights with different light and shade.

In general, a projection apparatus includes a light source and a grating. Grating is an optical device composed of a large number of parallel slits with the same width. Where there is a slit, the light source forms a bright light through the slit. Such a bright light is called a stripe. Where there is no slit, the light source cannot penetrate and forms dark color. The projection image is burned on the grating, and the light source projects the projection image on the grating onto the surface of the object.

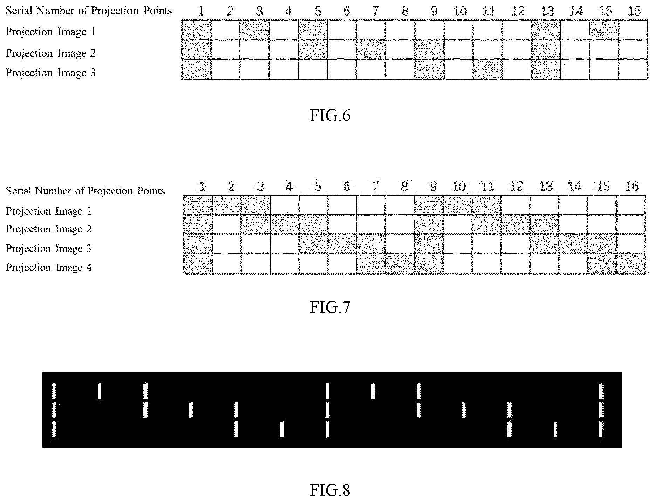

All the projection images are aligned to form a coding pattern. The coding pattern is divided according to the projection position, and a pattern formed by elements of all the projection images at a same projection position is called a sub-pattern. That is, the sub-pattern is a pattern of the coding pattern at the same projection position. As shown in FIG.8, a coding pattern consists of three projection images, where each row in the horizontal direction is a projection image, and each column in the vertical direction is a sub-pattern.

The sub-patterns include sub-patterns of a first type A and sub-patterns of a second type B. The sub-pattern of the first type A is a sub-pattern that has a stripe only in one projection image. The sub-pattern of the second type B is a sub-pattern that has stripes in at least two projection images.

In the coding pattern, the sub-patterns of the first type A and the sub-patterns of a second type B appear at intervals.

For example, as shown in FIG.4, there are six projection points (i.e. projection positions) and three projection images, in which gray squares represent stripes. As shown in projection image 1, it has stripes at projection points 1 to 3, and no stripes appear at other projection points.

All the three projection images have stripes at the projection point 1, so the sub-pattern of the projection point 1 is a sub-pattern of the second type B. Only the projection image 1 has a stripe at the projection point 2, so the sub-pattern of the projection point 2 is a sub-pattern of the first type A. Both the projection images 1 and 2 have stripes at the projection point 3, so the sub-pattern of the projection point 3 is a sub-pattern of the second type B, and so on. It can be seen that the coding pattern composed of the projection images 1 to 3 is a pattern in which the sub-patterns of the second type B and the sub-patterns of the first type A appear alternately. Or, it may be a coding pattern composed of the sub-patterns of the first type A and the sub-patterns of the second type B that appear alternately, which is not limited by the present embodiment.

The adjacent sub-patterns of the first type have stripes in different projection images. As shown in FIG.4, sub-patterns of projection points 2, 4 and 6 are all the sub-patterns of the first type A. The sub-patterns of projection points 2 and 4, or the sub-patterns of projection points 4 and 6 are adjacent sub-patterns of the first type. It can be seen that any two adjacent sub-patterns of the first type have different patterns, and stripes appear in different projection images.

When decoding the above-mentioned coding pattern, one of the implementations can be: according to the difference between the sub-patterns of the first type A and the sub-patterns of the second type B, distinguishing the sub-patterns of the first type A from the sub-patterns of the second type B; then, according to the difference of the adjacent sub-patterns of the first type A and the appearance regularity of the sub-patterns of the first type A, determining the corresponding relationships between projection points (i.e. projection positions) and imaging points (i.e. imaging positions) in all the sub-patterns of the first type A; and further identifying the sub-patterns of the second type B, and determining the corresponding relationships between the imaging points and the projection points.

Patterns of adj acent sub-patterns of the second type may be the same or different. Different patterns may be beneficial to better determine the position of the sub-pattern of the second type B. For example, taking FIG.4 as an example, after determining the sub-pattern of the projection point 2 is a sub-pattern of the first type, we know that it is sub-patterns of the second type before and after. If the two patterns are the same, it is not easy to determine whether the serial number is 1 or 3. If the two patterns are different, it is easier to determine the serial number.

The adjacent sub-patterns of the second type have different patterns may be shown as follows: in patterns of adjacent sub-patterns of the second type, positions where stripes appear in the projection image are different, or number of stripes appearing in the projection image is different. In short, the greater the difference between the two patterns, the better it is to be identified.

The sub-patterns of the second type may be further divided into sub-patterns of the third type and sub-patterns of the non-third type. A sub-pattern having stripes appearing in all the projection images is regarded as a sub-pattern of the third type. Because the sub-pattern of the third type has stripes in all the projection images, it is easier to be identified when decoding.

The coding pattern obtained by the above method is used as a basic pattern. In order to facilitate decoding, constraints may also be added to the basic pattern, requiring that the pattern of each sub-pattern in the basic pattern is different.

Assume that the pixel value of the imaging point with stripes is 1, and the pixel value of the imaging point without stripes is 0. It can be seen that, in FIG.4, the code-word corresponding to each sub-pattern is different, and it may be decoded according to conventional methods, such as determining the corresponding relationship between the imaging point and the projection point according to the code-word of the imaging point. Of course, other decoding methods may also be used, which is not limited by the present embodiment.

Sometimes, due to the requirement of high resolution, more sub-patterns are needed. A new coding is formed by periodically repeating the basic pattern, that is, repeating each sub-pattern of the basic pattern according to a same predetermined period, so that it is not necessary to add new projection images. For 2^{N} sub-patterns, an adoption of 3 projection images may still meet the decoding requirements.

In one embodiment, set the first sub-pattern of the basic pattern as the sub-pattern of the third type C. Since the sub-pattern of the third type C is easy to identify, it is easier to determine the boundary of the basic pattern.

As shown in FIG.5, FIG.5 is a pattern formed by repeating the pattern of FIG.4. In such a coding method, when decoding, it may first determine the boundary of the basic pattern, and then decode the basic pattern using the above method. The boundary of the basic pattern may be determined in view of the repetition regularity of a sub-pattern. For example, as shown in FIG.5, the boundary of the basic pattern is determined according to the repetition regularity of the sub-pattern of the projection point 1.

In one embodiment, adjacent sub-patterns of the first type have stripes in different projection images, which includes: in the coding pattern composed by aligning all the projection images, the sub-patterns of the first type sequentially have stripes in all the projection images in turn. Sequentially having stripes here refers to stripes appear in an arrangement order of all the projection images, or stripes appear periodically in an arrangement order of all the projection images.

As shown in FIG.5, the sub-patterns of the first type have stripes at projection points 2, 4 and 6 sequentially in an order of projection images 1, 2 and 3, and then taking this as a period to repeat the above-mentioned pattern at projection points 8, 10 and 12, and so on. Of course, the sub-patterns of the first type may also have stripes at each projection point sequentially in an order of projection images 1, 3 and 2 or other arrangement orders (such as 2, 3 and 1).

In this way, the adjacent sub-patterns of the first type in the same projection image may have larger spacing, which is beneficial to improve the accuracy of decoding the sub-patterns of the first type and obtain greater depth of field, and is suitable for three-dimensional information reconstruction of the surface of objects with large surface depth changes. Otherwise, it is only suitable for scenarios with small depth of field. The depth of field corresponds to the surface depth change of the object, and when the surface depth change of an object is small, the depth of field requirement is low, and vice versa.

In order to further increase the depth of field, a sub-pattern of a fourth type D may be introduced into the coding pattern on the basis of the afore-mentioned embodiments. The sub-pattern of the fourth type D has no stripes in all the projection images. A sub-pattern of the fourth type is interposed between the sub-pattern of the first type and the sub-pattern of the second type adjacent to each other.

As shown in FIG.6, the sub-patterns of the projection points 1, 5, 9 and 13 are of the second type, the sub-patterns of the projection points 2, 4, 6, 8, 10, 12, 14 and 16 are of the fourth type, and the sub-patterns of the projection points 3, 7, 11 and 15 are of the first type. A sub-pattern of the fourth type is between the sub-pattern of the second type and the sub-pattern of the first type adjacent to each other.

According to the coding scheme shown in FIG.6, after determining the sub-patterns of the second type according to the afore-mentioned decoding scheme, determining all the sub-patterns of the fourth type according to "a sub-pattern of the fourth type is between the sub-pattern of the second type and the sub-pattern of the first type adjacent to each other".

In FIG.5, a spacing between the adjacent sub-patterns of the first type in the same projection image is 6. In FIG.6, a spacing between the adjacent sub-patterns of the first type in the same projection image is 12, which is much larger than that in FIG.5, and thus it may be suitable for scenarios with greater depth of field.

In order to meet the requirements of greater depth of field, it may further increase the number of projection images. If using four projection images, as shown in FIG.7, it can be seen that a spacing between the adjacent sub-patterns of the first type in the same projection image is 8, which is larger than that in FIG.5. In addition to the measure of increasing the number of projection images, if a sub-pattern of the fourth type is interposed between the sub-pattern of the first type and the sub-pattern of the second type adjacent to each other, it may further increase the spacing and meet the requirements of greater depth of field.

In the present embodiment, by arranging sub-patterns of the first type and sub-patterns of the second type in the coding scheme, in which the two types of sub-patterns appear alternately, the present invention, compared with the binary coding/Gray code coding scheme, may determine the corresponding relationship between the imaging position and the projection position with fewer projection images at high resolution, thereby improving the measurement efficiency of the system; and by causing sub-patterns of the first type appear stripes sequentially in all the projection images and introducing sub-patterns of the fourth type, it enables the imaging position and projection position for three-dimensional points with larger depth of field to be correctly matched, and has better matching robustness.

According to one embodiment of the present invention, as shown in FIG.2, a system for three-dimensional information reconstruction includes:
A projection apparatus 100, an image sensor 200 and a reconstruction unit 300 are included.

The projection apparatus 100 forms a plurality of projection images according to the structured light coding method for three-dimensional information reconstruction of the afore-mentioned embodiments, and projects the projection images to a surface of an object to be measured in time sequence.

The image sensor 200 images the projection images projected on the surface of the object to be measured, so as to obtain an imaging image.

The reconstruction unit 300 decodes the imaging image, determines a corresponding relationship between each imaging position and projection position, and reconstructs three-dimensional information of the surface of the object to be measured according to the corresponding relationship.

Specifically, the projection apparatus 100 forms a plurality of projection images according to the structured light coding method for three-dimensional information reconstruction of the afore-mentioned embodiments. The reconstruction unit 300 decodes the imaging image according to the structured light decoding method for three-dimensional information reconstruction of the afore-mentioned embodiments, and determines the corresponding relationship between each imaging position and projection position.

The coding pattern is composed of a plurality of projection images, and the decoding pattern is composed of a plurality of imaging images.

It should be noted that, all the above embodiments may be freely combined as required. The above is only the preferred embodiment of the present invention, and it should be pointed out that a person skilled in the art may make several improvements and modifications without departing from the principles of the present invention, and these improvements and modifications should also be regarded as the protection scope of the present invention.

## Claims

1. A structured light coding method for three-dimensional information reconstruction, comprising:
forming at least three projection images, a coding pattern composed by aligning all the projection images comprising:
sub-patterns of a first type and sub-patterns of a second type, wherein the sub-patterns are patterns formed by all the projection images at a same projection position;
wherein the sub-patterns of the first type and the sub-patterns of the second type appear alternately, the sub-patterns of the first type have a stripe only in one projection image, the sub-patterns of the second type have stripes in at least two projection images;
wherein any two adjacent sub-patterns of the first type have stripes in different projection images.

2. The structured light coding method for three-dimensional information reconstruction according to claim 1, wherein any two adjacent sub-patterns of the first type have stripes in different projection images comprises:
in the coding pattern, the sub-patterns of the first type sequentially have stripes in all the projection images in turn.

3. The structured light coding method for three-dimensional information reconstruction according to claim 1, wherein
any two adjacent sub-patterns of the second type have different patterns.

4. The structured light coding method for three-dimensional information reconstruction according to claim 3, wherein any two adjacent sub-patterns of the second type have different patterns comprises:
in patterns of adjacent sub-patterns of the second type, positions where stripes appear in the projection image are different, or the number of stripes appearing in the projection image is different.

5. The structured light coding method for three-dimensional information reconstruction according to claim 4, wherein
setting a sub-pattern of a third type in the sub-patterns of the second type, the sub-pattern of the third type having stripes in all the projection images.

6. The structured light coding method for three-dimensional information reconstruction according to claim 5, wherein
setting a first sub-pattern as the sub-pattern of the third type.

7. The structured light coding method for three-dimensional information reconstruction according to claim 5, wherein
determining a basic pattern, a pattern of each sub-pattern in the basic pattern is different;
repeating each sub-pattern of the basic pattern according to a same predetermined period.

8. The structured light coding method for three-dimensional information reconstruction according to any of claims 1 to 7, wherein
the coding pattern further comprises sub-patterns of a fourth type, and a sub-pattern of the fourth type is interposed between the sub-pattern of the first type and the sub-pattern of the second type adjacent to each other.

9. A system for three-dimensional information reconstruction, comprising: a projection apparatus, an image sensor, and a reconstruction unit, wherein
the projection apparatus is configured to form a plurality of projection images according to the structured light coding method for three-dimensional information reconstruction of any of claims 1 to 8, and project the projection images to a surface of an object to be measured in time sequence;
the image sensor is configured to image the projection images projected on the surface of the object to be measured, so as to obtain an imaging image;
the reconstruction unit is configured to decode the imaging image, determine a corresponding relationship between each imaging position and projection position, and reconstruct three-dimensional information of the surface of the object to be measured according to the corresponding relationship.
